# EUROPEAN PATENT APPLICATION

(11) **EP 4 623 862 A1**
(43) Date of publication of application: **01.10.2025**
(21) Application number: 24166282.4
(22) Date of filing: 26.03.2024
(51) Int. Cl.: A61C 13/00, A61C 13/14, A61C 13/16, A61C 13/20, C03C 23/00, F27B 17/02, A61C 5/70

(54) **PROCESS FOR PREPARING AN INDIRECT DENTAL RESTORATION**

(71) Applicant: Dentsply Sirona Inc., York, PA 17401 (US); DeguDent GmbH, 63457 Hanau (DE)
(72) Inventor: Fecher, Stefan, 63457 Hanau (DE); Dr. Völkl, Lothar, 63457 Hanau (DE); Meegdes, Marcel, 63457 Hanau (DE)
(74) Representative: Aldridge, Henry Alexander

(57) **Abstract**

The present invention provides a process for preparing an indirect dental restoration comprising the following steps:
(a) providing a partially sintered zirconia dental mill blank;
(b) milling a partially sintered dental restoration from the mill blank;
(c) sintering the partially sintered dental restoration by irradiating light having a wavelength in the range of 200 to 500 nm to heat the dental restoration to a temperature in the range of from 1400 °C to 1700 °C for at least 30 seconds for preparing a sintered dental restoration,
wherein at least the irradiation exposed surface portion of the dental restoration comprises one or more metal oxides having a band gap of 5.0 eV or less.

Moreover, the present invention provides a dental sintering furnace for sintering a partially sintered zirconia dental restoration to prepare an indirect dental restoration, comprising:
(a) a chamber adapted to receive a partially sintered dental restoration on one or more point-like contact surfaces of a support adapted to expose a maximum area of the surface of the partially sintered dental restoration;
(b) one or more light sources emitting UV-light at a wavelength in the range of from 200 to 500 nm; and
(c) reflecting means for directing radiation to the surface area of a dental restoration other than the surface area supported by the point-like contact surfaces of the support, which is shielded from direct irradiation of the UV-light of the one or more light sources.

## Description

### Field of the Invention

The present invention relates to a process for preparing an indirect dental restoration from a partially sintered zirconia dental mill blank. Moreover, the present invention relates to dental sintering furnace for sintering a partially sintered zirconia dental restoration to prepare an indirect dental restoration.

According to the present invention, an indirect dental restoration may be prepared chairside by sintering a milled partially sintered dental restoration in a short time of 10 minutes or less while keeping the grain size of the zirconia essentially small compared to a process using a conventional dental furnace so that a high level of mechanical and esthetical properties are achieved with significantly less energy consumption compared to a process using a conventional dental furnace. Ideally, an indirect dental restoration may be prepared chairside so that only a single appointment is required to permanently restore a tooth while avoiding the need for a temporary restoration.

### Background of the Invention

Indirect dental restorations comprising zirconia are known. An indirect dental restoration comprising zirconia is commonly prepared by milling a partially sintered zirconia dental mill blank, followed by sintering the milled partially sintered zirconia dental mill blank for preparing the indirect dental restoration.

A partially sintered zirconia mill blank is compacted to the density of about 50% and pre-sintered to possess sufficient strength for handling and milling but is not yet fully dense. Using a computer-aided design (CAD) software, the dental restoration's design is finalized based on the patient's digital scans and/or dental impressions. The design is then sent to a computer-aided manufacturing (CAM) system, where a precision milling machine mills the restoration out of the zirconia mill blank according to the digital design.

After milling, the restoration requires sintering to achieve its final density and mechanical properties as well as esthetic properties. According to conventional methods, the milled restoration is placed in a conventional electric furnace, where it is subjected to high temperatures, typically between 1400°C and 1550°C. This sintering process causes the zirconia particles to fuse together, eliminating porosity and significantly increasing the strength and durability of the material. The sintering time can vary in a conventional electric furnace but is carefully controlled to be several hours to ensure the restoration achieves optimal physical properties.

The heating program for sintering a dental restoration starting from a conventional partially sintered zirconia dental mill blank in an electric furnace, typically involves several stages to ensure that the restoration achieves its final strength, density, and aesthetic properties. A typical heat program for preparing zirconia dental restorations includes the following stages:
In a ramp-up phase, the temperature is increased to the final sintering temperature. This temperature is critical for the densification of zirconia and is typically in the range of 1400°C to 1550°C for most dental zirconia materials. The rate of temperature increase during this phase is carefully controlled to ensure uniform heating throughout the restoration.

In a high-temperature hold phase and once the final sintering temperature is reached, the restoration is held at this temperature for a specific duration. The high-temperature hold allows the zirconia particles to fuse together, increasing the material's density and strength. The duration of this hold is crucial and can significantly affect the final properties of the restoration. It typically ranges from 1 to 2 hours, depending on the zirconia type and the desired characteristics of the final product.

In the cool down phase, after the high-temperature hold, the conventional electric furnace is allowed to cool down slowly to room temperature. This cooling phase must be controlled to prevent thermal shock and to ensure that the newly sintered restoration does not develop cracks or other defects.

The exact temperatures, rates of temperature change, and hold times can vary depending on the specific type of zirconia used, the dental furnace's specifications, and the desired properties of the final restoration.

Given that sintering an indirect dental restoration in a conventional dental furnace is a critical step in achieving desired mechanical properties and aesthetics, several problems can arise during this process, leading to quality issues with the final product.

For example, if a conventional dental furnace does not maintain a uniform temperature or experiences fluctuations, the sintering becomes uneven, which can cause parts of the restoration to be over- or under-sintered, affecting the restoration's strength, density, warpage, aesthetics and fit.

Also, too rapid heating in a conventional dental furnace can cause thermal shock, leading to cracks or warpage in the restoration. Similarly, rapid cooling can induce stresses in the material, resulting in microcracks or compromised structural integrity.

Insufficient hold time at the sintering temperature in a conventional dental furnace may prevent the zirconia particles from fully densifying. This incomplete sintering can result in a restoration with lower than expected strength and durability.

Contaminants in a conventional dental furnace, such as residual materials from previous sintering cycles or environmental contaminants, can become incorporated into the restoration. This contamination can alter the color, translucency, or mechanical properties of the final product.

Excessive hold times or temperatures higher than recommended can lead to over-sintering in a conventional dental furnace. This condition can cause grain growth in the ceramic, making the restoration more brittle and susceptible to fracture.

If any organic binders used in the partially sintered zirconia dental mill blank are not completely removed before reaching the sintering temperature in a conventional dental furnace porosity or inclusions within the restoration may occur, affecting its mechanical properties and aesthetics.

Finally, overloading the furnace or improper placement of items can lead to restricted airflow and thermal gradients in a conventional dental furnace, causing uneven sintering. Additionally, contact between restorations or with the furnace walls can result in deformations or surface flaws.

Addressing the issues requires careful control of the sintering process, including precise temperature ramp rates, hold times, and cooling rates, as well as regular maintenance and calibration of the furnace to ensure uniform and consistent heating.

The complexity of the sintering process in a conventional dental furnace prevents the dental chairside preparation of an indirect dental restoration. Therefore, previously, for applying an indirect dental zirconia restoration, a first appointment was necessary to prepare the tooth and to obtain the necessary fabrication information. Specifically, the tooth had to be prepared by removing any decayed or damaged tissue, and then the remaining healthy tissue had to be reshaped. Once the tooth had been prepared, a dental impression or oral scan had to be taken to obtain the information for the dental lab. Typically, it may take about 1 or 2 weeks for the permanent restoration to be completed so that a temporary restoration had to be placed in the meantime. At a second appointment, the permanent indirect restoration was checked for fit and cemented in place.

Also, given that temperature programs in a conventional dental furnace require up to 12 hours of sintering time, the preparation of an indirect dental restoration from a partially sintered zirconia dental mill blank was limited to a dental laboratory in the absence of a patient.

As a result of the limitations of the prior art, the preparation of an indirect dental zirconia restoration was characterized by long turn-around times and multiple visits of the patient at the dental office.

### Summary of the Invention

Therefore, according to a first aspect, it is a problem of the present invention to provide a process for preparing an indirect dental restoration from a partially sintered zirconia dental mill blank in a short time of less than 10 minutes while achieving a high level of mechanical and esthetical properties, so that the process may be carried out chairside by the dental practitioner in the presence of the patient so that a temporary restoration may be avoided. Moreover, it is a problem of the present invention to provide a process which requires significantly less energy than conventional sintering processes.

According to a second aspect, it is the problem of the present invention to provide a sintering apparatus for use in the process of the present invention.

According to a first aspect, the present invention provides a process for preparing an indirect dental restoration comprising the following steps:
(a) providing a partially sintered zirconia dental mill blank;
(b) milling a partially sintered dental restoration from the mill blank;
(c) sintering the partially sintered dental restoration by irradiating light having a wavelength in the range of 200 to 500 nm to heat the dental restoration to a temperature in the range of from 1400 °C to 1700 °C for at least 10 seconds for preparing a sintered dental restoration,
   wherein at least the irradiation exposed surface portion of the dental restoration comprises one or more metal oxides having a band gap of 5.0 eV or less.

According to the present invention, an indirect dental restoration may be prepared using a partially sintered zirconia mill blank by sintering the restoration with UV light irradiation (200-500 nm wavelength) for a short period of time of less than about 10 minutes at temperatures between 1400 °C and 1700 °C. The irradiated surface of the restoration interacts with the irradiation through specific metal oxides (e.g., Ti, Nb, Ce) to increase the sintering rate and to improve the properties of the sintered restoration. Preferably, the zirconia mill blank is formed from spray-dried powder to limit the grain size of the UV-sintered restoration. Finally, a glazing step may be applied for surface finishing by also using a UV sintering step.

According to a second aspect, the present invention provides a dental sintering furnace for sintering a partially sintered zirconia dental restoration to prepare an indirect dental restoration, comprising:
(a) a chamber adapted to receive a partially sintered dental restoration on one or more point-like contact surfaces of a support adapted to expose a maximum area of the surface of the partially sintered dental restoration;
(b) one or more light sources emitting UV-light at a wavelength in the range of from 200 to 500 nm; and
(c) reflecting means for directing radiation to the surface area of a dental restoration other than the surface area supported by the point-like contact surfaces of the support, which is shielded from direct irradiation of the UV-light of the one or more light sources.

The present invention is based on the recognition that a partially sintered zirconia dental restoration made, for example, of zirconia and yttria is opaque for UV-light of a wavelength in the range of from 200 to 500 nm. Therefore, UV-light does not enter deep into the bulk of the partially sintered zirconia dental restoration made of zirconia and yttria.

Moreover, the present invention is based on the recognition that a partially sintered zirconia dental restoration made of zirconia and yttria cannot be heated efficiently by using UV-light of a wavelength in the range of from 200 to 500 nm given the low heat conductivity in the order of about 0.1 W m⁻¹ K⁻¹ at room temperature and a lack of interaction of UV-light of a wavelength in the range of from 200 to 500 nm with the partially sintered zirconia dental restoration. Therefore, a partially sintered zirconia dental restoration made, for example, of zirconia and yttria cannot be sintered using of a wavelength in the range of from 200 to 500 nm.

However, the present inventors have recognized that the lack of interaction of UV-light of a wavelength in the range of from 200 to 500 nm with the partially sintered zirconia dental restoration essentially made of zirconia and yttria is due to the large band gap of zirconia and yttria. Moreover, the present inventors have recognized that at increased temperatures, the band gap of zirconia narrows significantly, and the heat conductivity increases sufficiently. Finally, the present inventors have recognized that when at least the irradiation exposed surface portion of the dental restoration comprises one or more metal oxides having a band gap of 5.0 eV or less, the partially sintered zirconia dental restoration may efficiently interact with UV-light of a wavelength in the range of from 200 to 500 nm so that initially the surface of the partially sintered zirconia dental restoration is heated to a high temperature. Subsequently, the adjacent portions of the partially sintered zirconia dental restoration are heated, and the bad gap of the zirconia material is decreased and the thermal conductivity is increased, resulting in an acceleration of the sintering process. As a result, a fully dense dental restoration may be prepared in less than 10 minutes, which has a high level of mechanical and esthetic properties. Moreover, the irradiation process requires significantly less energy compared to a sintering process using a conventional dental furnace.

### Brief Description of the Figures

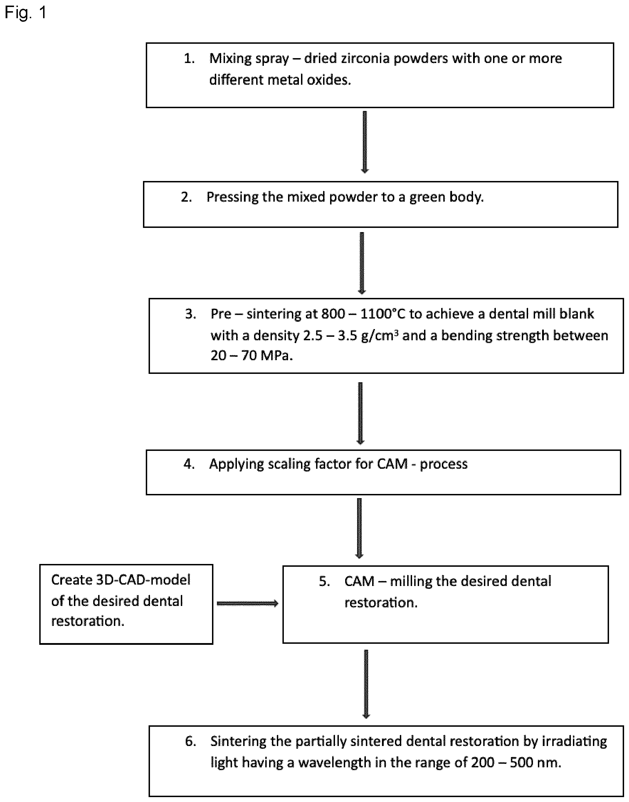

Fig. 1 shows a flow chart of an embodiment of a process of the present invention in the context of an overall process for preparing an indirect dental restoration essentially made of zirconia and yttria.

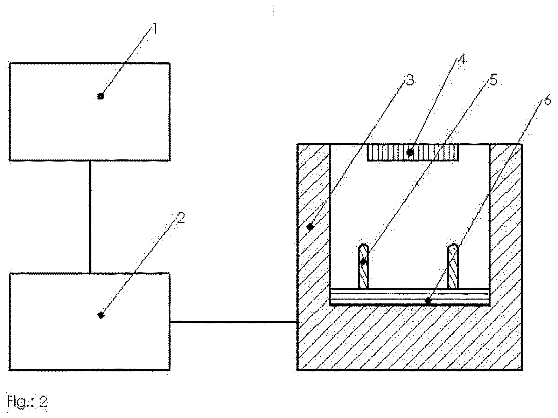

Fig. 2 shows a first embodiment of a dental sintering furnace for sintering a partially sintered zirconia dental restoration to prepare an indirect dental restoration according to the present invention. The embodiment of Fig. 2 is characterized by a reflecting means positioned opposite from the one or more light sources emitting UV-light for directing radiation to the surface area of a dental restoration other than the surface area supported by the point-like contact surfaces of the support, which is shielded from direct irradiation of the UV-light of the one or more light sources. Moreover, the embodiment is characterized by two support means providing each a point-like contact surface for exposing a maximum area of the surface of the partially sintered dental restoration.

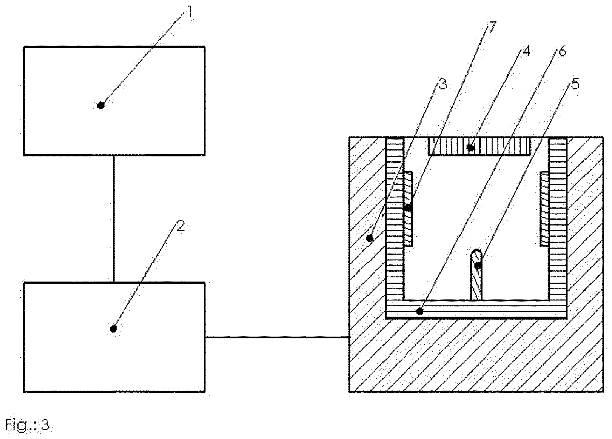

Fig. 3 shows a second embodiment of a dental sintering furnace for sintering a partially sintered zirconia dental restoration to prepare an indirect dental restoration according to the present invention. The embodiment of Fig 3 is characterized by reflecting means positioned opposite from each of the light sources emitting UV-light which are provided on every side wall and the top wall of the chamber, for directing radiation to the surface area of a dental restoration other than the surface area supported by the point-like contact surfaces of the support, which is shielded from direct irradiation of the UV-light of the one or more light sources. Moreover, the embodiment is characterized by a single support means providing a point-like contact surface for exposing a maximum area of the surface of the partially sintered dental restoration.

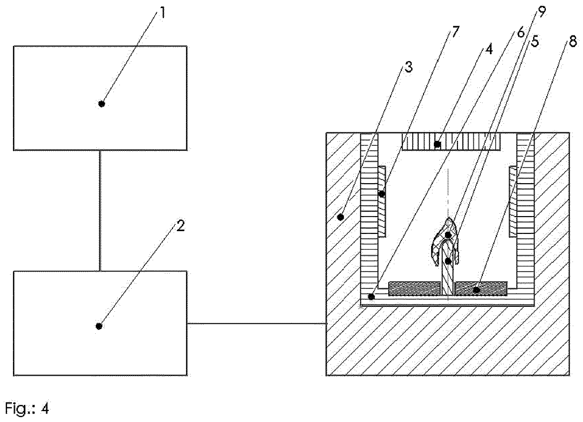

Fig. 4 shows a third embodiment of a dental sintering furnace for sintering a partially sintered zirconia dental restoration to prepare an indirect dental restoration according to the present invention. The embodiment of Fig 4 is characterized by reflecting means positioned opposite from light sources emitting UV-light which are provided on every side wall and the top wall of the chamber, for directing radiation to the surface area of a dental restoration other than the surface area supported by the point-like contact surfaces of the support, which is shielded from direct irradiation of the UV-light of the one or more light sources. Additionally, light sources are provided on the bottom wall to actively irradiate from below. Moreover, the embodiment is characterized by a single support means providing a point-like contact surface for exposing a maximum area of the surface of the partially sintered dental restoration.

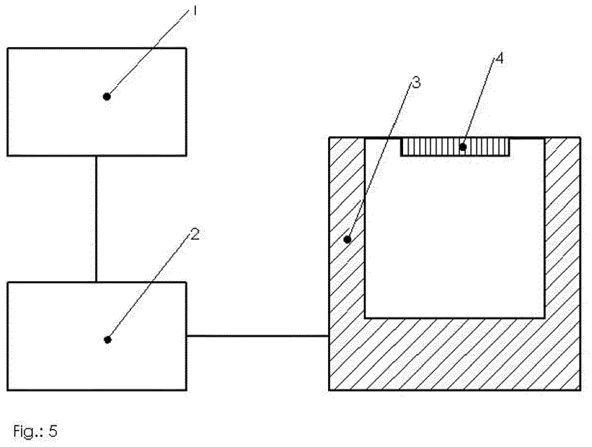

Fig. 5 shows an embodiment of a dental sintering furnace which is known from the prior art, which does not contain reflecting means for directing radiation to the surface area of a dental restoration other than the surface area supported by the point-like contact surfaces of the support, which is shielded from direct irradiation of the UV-light of the one or more light sources. Moreover, the embodiment does not have a support means providing a point-like contact surface for exposing a maximum area of the surface of the partially sintered dental restoration.

### Detailled Description of Preferred Embodiments

The present invention provides a process for preparing an indirect dental restoration. The process may be carried out chairside in the presence of a patient.

An "indirect dental restoration" refers to a dental repair or replacement that is fabricated outside of the mouth of the patient before being placed or cemented into a patient's mouth. Indirect restorations may be used when the tooth damage is too extensive for a direct restoration to be feasible, or when a more durable, long-lasting material is required that cannot be applied directly in the oral cavity. Indirect dental restorations include crowns, bridges, inlays, onlays, abutments and veneers.

According to the present invention, indirect restorations are made from partially sintered zirconia dental mill blanks. Preferably, the partially sintered zirconia dental mill blank comprises yttria. Yttria (yttrium oxide, Y₂O₃) plays a crucial role in stabilizing the crystal structure of zirconia (zirconium dioxide, ZrO₂) in zirconia-yttria mill blanks. Zirconium dioxide naturally exists in three different crystallographic phases depending on the temperature: monoclinic (room temperature to about 1170°C), tetragonal (about 1170°C to 2370°C), and cubic (above 2370°C). The transformation from the tetragonal to monoclinic phase upon cooling is accompanied by a volume increase, which can lead to cracking and reduced mechanical strength. Yttria is added to zirconia to stabilize the tetragonal and/or cubic phases at room temperature, thereby enhancing the material's mechanical properties and thermal stability. It was known that yttria stabilizes the tetragonal and cubic phases of zirconia at room temperature. Accordingly, the presence of yttria allows zirconia to retain its high strength and toughness at lower temperatures, making it suitable for dental applications. Moreover, it was known that the addition of yttria enhances the mechanical properties of zirconia, including its strength, fracture toughness, and resistance to wear which is essential for the durability and longevity of dental restorations by withstanding the forces of chewing and the harsh environment of the oral cavity. Also, it was known that yttria-stabilized zirconia (YSZ) has a more translucent appearance than pure zirconia, making it more aesthetically pleasing and suitable for dental restorations that require a natural appearance, notably where cosmetic considerations are paramount. Also, yttria-stabilized zirconia is biocompatible so that an adverse reaction when implanted in the body is avoided. Finally, it was known that the addition of yttria improves the thermal stability of zirconia, making it resistant to changes in temperature. This property is important for dental restorations, which are subjected to varying temperatures through the consumption of hot and cold foods and beverages.

The proportion of yttria added to zirconia typically ranges from 3 mol% to 8 mol%, with 3 mol% yttria-stabilized zirconia (3Y-TZP) being a preferred composition in the process of the present invention in view of strength and toughness, while 5 mol% yttria-stabilized zirconia (5Y-TZP) may be preferable in view of aesthetic properties. This composition ensures that the zirconia remains in a partially stabilized tetragonal or tetragonal/cubic phase, which can transform to the monoclinic phase at the crack tip under stress, absorbing energy and increasing the material's resistance to crack propagation.

In the context of the process of present invention, the damaged tooth is prepared, an impression and/or scan of the prepared tooth or teeth and the surrounding dentition is taken, and the impression and/or scan is used as the basis for the preparation of the indirect dental restoration. When the indirect dental restoration is prepared chairside, a temporary restoration which is conventionally necessary, may be avoided. Once the indirect restoration is ready, it is fitted, adjusted if necessary, and then cemented or bonded to the prepared tooth during the same dental visit.

In a first step (a) of the process of the present invention, a partially sintered zirconia dental mill blank is provided. A "partially sintered zirconia dental mill blank" refers to a pre-formed block of zirconia ceramic that has undergone an initial sintering process but is not yet fully densified. This intermediate state of sintering leaves the zirconia in a condition that is easier to machine or mill into a specific shape, such as a dental crown, bridge, abutment, inlay or onlay, using computer-aided design and computer-aided manufacturing (CAD/CAM) technology. Accordingly, a specific partially sintered zirconia mill blank is selected for the milling process from blanks having various sizes and shades to match the natural color of the patient's teeth.

The partial sintering process involves heating the zirconia powder at a temperature that is high enough to initiate bonding between the particles, but lower than the temperature required for full sintering. This results in a material that is denser than the green (unsintered) state but less dense than fully sintered zirconia. The advantage of this partially sintered state is that it is softer and less abrasive to the milling tools, allowing for easier and more precise machining of the dental restoration. According to a preferred embodiment the partially sintered zirconia dental mill blank has a three-point flexural strength in the range of from 20 to 70 MPa, more preferably in the range of from 30 to 65 MPa, still more preferably 40 to 60 MPa. The three-point flexural strength may be measured according to DIN ISO 6872.

According to a preferred embodiment, the partially sintered zirconia dental mill blank has a density in the range of from 2.5 to 3.5 g/cm³, more preferably in the range of 2.7 to 3.3 g/cm³.

The density may be measured by using the buoyancy method (based on the Archimedes principle) to estimate the volume. The sample mass is measured in air and in a liquid with a known density. Then the volume of the sample can be calculated based on the liquid density. Based on the mass and the volume of the sample, the density of the sample may be calculated. A standard test method for determining density is subject to DIN EN ISO 1183-1:2019-09.

According to a preferred embodiment, the partially sintered zirconia dental mill blank is obtainable by a process comprising:
(i) providing a spray-dried zirconia powder having an average grain size in the range of from 30 to 90 µm;
(ii) pressing the spray-dried zirconia powder in the presence of a binder for preparing a green body;
(iii) heating the green body to a temperature in the range of from 250 to 600 °C for eliminating the binder; and
(iv) heating the heated green body a temperature in the range of from 800 to 1100 °C to provide a partially sintered zirconia dental mill blank.

Preferably, the spray-dried zirconia powder is obtainable by spray-drying a dispersion comprising zirconia primary particles having an average primary particle size in the range of from 10 to 50 nm, more preferably 20 to 40 nm.

The determination of the average primary particle size is preferably carried out using a conventional laser diffraction particle sizing method as embodied by a MALVERN Mastersizer S or MALVERN Mastersizer 2000 apparatus.

In a second step (b) in the process of the present invention, a partially sintered dental restoration is milled from the mill blank. Milling a partially sintered dental restoration from a zirconia mill blank involves a precise, computer-controlled process that shapes the blank into a dental restoration, such as a crown, bridge, inlay, onlay, abutment or veneer. The step is typically carried out using a CAD/CAM (Computer-Aided Design/Computer-Aided Manufacturing) system. Prior to the milling, a digital model of the desired dental restoration is created which may be done based on a digital scan of the patient's mouth or a dental impression, which is then converted into a digital 3D model using a scanner and CAD software. Subsequently, a dentist or dental technician uses the CAD software to design the restoration, adjusting the shape, size, and fit based on the specific requirements of the patient's dental anatomy. The partially sintered state of the blank makes it faster to mill than fully sintered zirconia, which is much harder and more abrasive to the milling tools. The designed restoration is sent from the CAD software to a CAM system, which controls the milling machine. The milling machine holds the zirconia blank in place and uses high-speed rotating tools (burrs) to carve the blank into the shape of the restoration. The milling tools are made of materials such as diamond coated tungsten carbide or tungsten carbide to effectively cut through the zirconia.

The milling process can take anywhere from a few minutes to over an hour, depending on the complexity of the restoration and the capabilities of the milling machine. After milling, the restoration may undergo additional processes such as manual detailing or surface treatment to refine its shape and surface texture.

The process of the present invention further comprises a step (c) of sintering the partially sintered dental restoration by irradiating light having a wavelength in the range of 200 to 500 nm. According to a specific embodiment the irradiated light has two or more intensity peaks in the range of from 200 to 500 nm. For example, the irradiated light may have one or more peaks in the range of from 250 to 350 nm and one or more peaks in the range of from 400 to 500 nm. According to a preferred embodiment, the irradiation is continuous. Alternatively, or additionally, the irradiation may be in form of one or a plurality of consecutive light pulses.

The intensity peaks of the light sources are subject to the specification of the manufacturer. Alternatively, the intensity peaks may be determined using a conventional UV spectrometer.

Preferably, the total irradiation time is at least 30 seconds and preferably 10 minutes or less, more preferably 7 minutes or less. According to a preferred embodiment, the irradiation time is adjusted in the range of from 30 to 360 seconds, more preferably 45 to 240 seconds,

According to the present invention, at least the irradiation exposed surface portion of the dental restoration comprises one or more specific metal oxides. The irradiation exposed surface portion covers ideally the entire surface of the partially sintered dental restoration and ideally has a thickness of at least the depth of irradiation of the surface by the UV light. According to a preferred embodiment, the partially sintered zirconia dental mill blank comprises a suitable amount of the specific metal oxides evenly distributed across the bulk of the material, or in case of a multi-layer mill blank, at least across layers which will be exposed after milling. Alternatively, at least the irradiation exposed surface of the partially sintered dental restoration is impregnated after milling and before sintering with a liquid composition containing a suitable amount of the specific metal oxides or a compound of Ti, Nb, Ce, Fe, Pr, or Bi which forms an oxide when heated in an oxidizing atmosphere, followed by drying whereby at least the irradiation exposed surface portion of the dental restoration comprises one or more specific metal oxides. The impregnated surface layer preferably has a thickness of at least 0.1 µm, more preferably at least 1 µm, still more preferably at least 10 µm.

The specific metal oxides have a band gap of 5.0 eV. or less. Preferably, the band gap is 4.0 eV or less, more preferably 3.5 eV or less, most preferably 3.0 or less. The band gap as used in the present invention is the energy difference between the top of the valence band (fully occupied by electrons) and the bottom of the conduction band (where electrons can move freely). The band gap determines the energy (or wavelength) of light that the material can absorb. The interaction between ultraviolet (UV) light and a metal oxide with a suitable band gap in the irradiation exposed surface portion of the dental restoration to create heat is believed to be based on the following principles of semiconductor physics and photothermal conversion. When UV light in the process of the present invention is irradiated on a specific metal oxide with a defined band gap, the energy of the UV photons is absorbed if it matches or exceeds the band gap energy of the metal oxide. This absorption promotes electrons from the valence band to the conduction band, creating electron-hole pairs. After the electrons are excited to the conduction band in the process of the present invention, they eventually return to the valence band, releasing their excess energy by photothermal conversion, whereby energy is released in the form of heat rather than being re-emitted by fluorescence or phosphorescence. The surprisingly efficient collective effect of many photons being absorbed and converted into heat energy results in a significant increase in temperature of the metal oxide material. This heat is then conducted to the adjacent zirconia material for sintering the dental restoration, thereby facilitating the densification and strengthening of the zirconia structure.

Moreover, as temperature increases, the lattice structure of zirconia expands due to the increased kinetic energy of the atoms, thereby altering the distances between atoms, which can affect the electronic structure of the zirconia material, including the energies of the valence and conduction bands. Also, a temperature increase in the zirconia material leads to more significant vibrations of the lattice (phonons), which interact with the electrons in the material, and can cause changes in the energy levels of the electrons, effectively modifying the energy bands. Accordingly, the effects of lattice expansion and electron-phonon interactions can lead to a narrowing of the band gap. Specifically, the energy of the conduction band may decrease relative to the valence band, reducing the band gap. Accordingly, at higher temperatures, more electrons have sufficient thermal energy to be excited across the band gap given that a reduced band gap means that less energy is required to excite an electron from the valence band to the conduction band. Accordingly, the zirconia material may contribute to the photothermal conversion of UV radiation into heat.

Metal oxides with band gaps suitable for absorbing UV light include metal oxides of Ti, Nb, Ce, Fe, Pr, and Bi. Preferably, the metal oxides are selected from one or more oxides of Ti, Nb, Ce, Fe, Pr, and Bi in a total amount of from 50 to 2000 ppm. Ti is preferably present in an amount of 400 and 1000 ppm, more preferably, 500 to 800 ppm. Nb is preferably present in an amount of 400 and 1000 ppm, more preferably, 500 to 800 ppm. Ce is preferably present in an amount of 400 and 1000 ppm, more preferably, 500 to 800 ppm. Fe is preferably present in an amount of 400 and 1000 ppm, more preferably, 500 to 800 ppm. Pr is preferably present in an amount of 400 and 1000 ppm, more preferably, 500 to 800 ppm. Bi is preferably present in an amount of 400 and 1000 ppm, more preferably, 500 to 800 ppm.

Optionally, one or more additional metal oxides may be present in combination. Specifically, the one or more oxides of Co, Ni, Cr and/or Mn may be present in a total amount of less than 50 ppm. Preferably, the one or more metal oxides are present in the irradiation exposed surface portion of the dental restoration. Alternatively, the metal oxides are distributed throughout the entire bulk of the presintered dental mill blank or the dental restoration. Alternatively, the metal oxides are distributed in specific layers of the dental mill blanks which intended to be exposed to the irradiation after the milling step. Alternatively, at least the irradiation exposed surface of the partially sintered dental restoration is impregnated after milling and before sintering with a liquid composition containing a suitable amount of the specific metal oxides or a compound of Co , Ni, Cr and/or Mn which forms an oxide when heated in an oxidizing atmosphere, followed by drying whereby at least the irradiation exposed surface portion of the dental restoration comprises one or more specific metal oxides. The impregnated surface layer preferably has a thickness of at least 0.1 µm, more preferably at least 1 µm, still more preferably at least 10 µm.

The amount of metal oxides may be determined by Glow Discharge Mass Spectrometry (GDMS), which is based on glow discharge atomization/ionization source combined with sector-field mass analyzer. Alternatively or additionally, the amount of metal oxides may be controlled based on the stoichiometry of the starting materials used.

Accordingly, the indirect dental restoration may be heated to a temperature in the range of from 1400 °C to 1700 °C for at least 10 seconds for preparing a sintered dental restoration. The heating rate of the dental restoration may be controlled by the amount of additional metal oxides and the intensity of the UV light. The temperature of the indirect dental restoration may be monitored by conventional methods. Preferably, a pyrometer, also known as an optical or radiation pyrometer, is used for monitoring the temperature of the dental restoration.

In case the heating rate is excessively high, the indirect dental restoration may be damaged. In case the heating rate is excessively low, the grain size of the indirect dental restoration may increase so that the mechanical properties are deteriorated.

The sintering step at a high temperature in a furnace achieves the final density and strength of the indirect dental restoration. The sintering step causes the zirconia to shrink predictably, which is accounted for during the design phase to ensure the final restoration fits perfectly. According to a preferred embodiment, the sintered dental restoration has a density of at least 5.8 g/cm³, more preferably, at least 6.0 g/cm³. Preferably, the sintered dental restoration has an average grain size of 600 nm or less, more preferably 400 nm or less.

Once sintered, the restoration can be glazed, stained or veneered to match the natural color of the patient's teeth and to achieve the desired aesthetic appearance. According to a preferred embodiment, the process of the present invention further comprises applying a glaze to the dental restoration by spraying or painting a glaze composition and irradiating with light of a wavelength in the range of from 400 to 500 nm for a predetermined time. Preferably, the glaze composition comprises metal oxides of Ti, Nb, Ce, Fe, Pr, and Bi, or a compound of Ti, Nb, Ce, Fe, Pr, or Bi which forms an oxide when heated in an oxidizing atmosphere. Alternatively, the glaze may be melted without additional metals.

Finally, the restoration is ready to be tested for fit and cemented into the patient's mouth.

This process according to the present invention allows to produce highly durable and aesthetically pleasing dental restorations with a precise fit, combining the advanced properties of zirconia and the capabilities of modern CAD/CAM technology with the convenience of a chairside treatment.

The process of the present invention will now be further explained based on Figure 1 showing a flow diagram of an embodiment of the process of the present invention. According to the process of the present invention, a partially sintered zirconia dental mill blank is provided. As shown by the embodiment in Fig. 1, spray-dried zirconia powders with one or more different metal oxides are mixed, and the mixed powder is pressed to a green body. Subsequently, the green body is presintered at 800 to 1100°C to obtain a dental mill blank with a density 2.5 - 3.5 g/cm³ and a bending strength between 20-70 MPa. In a next step, a 3D-CAD-model of the desired dental restoration is created by a scaling factor for the CAM process.

In a next step, a partially sintered dental restoration is milled from the mill blank, followed by sintering the partially sintered dental restoration by irradiating light having a wavelength in the range of 200 to 500 nm to heat the dental restoration to a temperature in the range of from 1400 °C to 1700 °C for at least 10 seconds for preparing a sintered dental restoration. Preferably, the dental restoration is heated to a temperature of 1400 °C to 1550 °C. Preferably, the dental restoration is heated for a period of time of from about 15 seconds to about 5 minutes.

According to a second aspect, the present invention provides a dental sintering furnace for sintering a partially sintered zirconia dental restoration to prepare an indirect dental restoration.

Preferably, the dental sintering furnace is a dental chairside sintering furnace which may be used for sintering a partially sintered zirconia dental restoration to prepare an indirect dental restoration in the presence of a patient. Specifically, the dental chairside sintering furnace may be used in a single visit of the patient, which includes preparing the hard dental tissue, collecting the data for preparing a digital model of the patient's teeth, designing the indirect dental restoration, milling, and sintering the indirect dental restoration, and placing the indirect dental restoration in the mouth of the patient.

The dental sintering furnace comprises a chamber adapted to receive a partially sintered dental restoration on one or more point-like contact surfaces of a support adapted to expose a maximum area of the surface of the partially sintered dental restoration.

The chamber may be constructed from high-temperature-resistant ceramics effectively insulating the sintering chamber, maintaining the required temperatures while protecting the external environment from heat. Alternatively, a stainless steel chamber with a heat-reflective coating on the interior may be provided. Advantageously, a double-walled stainless-steel chamber with an air gap or insulating material between the walls for enhanced thermal insulation may be provided whereby this design helps maintain a consistent temperature within the sintering chamber. A chamber constructed from a high-temperature-resistant unfilled polymer material, offering excellent thermal insulation properties and durability may also be used. Composites can be designed to have low thermal conductivity, reducing heat loss during the sintering process.

The one or more point-like contact surfaces of a support are provided for exposing a maximum area of the surface of the partially sintered dental restoration. The support preferably is made of materials offering excellent strength and stability at high temperatures, with minimal thermal expansion. Ceramic pins with a high melting point and low thermal conductivity, designed to minimize heat absorption and prevent any alteration in the sintering process due to the supports themselves, may also be used. Ceramic pins may be made of Al₂O₃ or ZrO₂.

The dental sintering furnace comprises reflecting means for directing radiation to the surface area of a dental restoration other than the surface area supported by the point-like contact surfaces of the support, which is shielded from direct irradiation of the UV-light of the one or more light sources. A series of adjustable mirrors made from high-reflectivity materials such as polished aluminum or silver coatings may be used as reflecting means. These mirrors can be positioned at angles to reflect UV light to the underside or sides of the dental restoration, ensuring even exposure. Alternatively, a reflective dome or chamber surrounding the sintering area, coated with a UV-reflective material may be used. This design ensures that UV light is diffused and directed from all angles toward the restoration, minimizing shadows and promoting uniform sintering. The dental sintering furnace further comprises one or more light sources emitting UV-light at a wavelength in the range of from 200 to 500 nm.

UV LED arrays offering a range of wavelengths suitable for activating the photothermal effect in the metal oxides within the zirconia are preferably used. Furthermore, a UV-reflective coating applied directly to the interior surfaces of the chamber is also preferred, which could be a UV-reflective paint or a thin film that covers the walls and the top, serving the same purpose as reflective panels. According to a preferred embodiment, at least two different light sources are installed in the dental chairside sintering furnace according to the invention. Preferably, the first UV light source is working in the range of from 200 to 350 nm and the second UV light source is working in the range from 350 to 500 nm.

According to a preferred embodiment, the one or more light sources of the dental chairside sintering furnace emit UV-light in the range of from 200 to 500 nm at an intensity of at least 80 W/cm². Preferably, the intensity is at least 90 W/cm².

Preferably, a control device for controlling the one or more light sources, preferably in response to a set of parameters forms part of the dental sintering furnace. According to a preferred embodiment, the dental sintering furnace comprises a device control unit which is a microcontroller-based control unit with a touchscreen interface, offering users the ability to easily select sintering programs, adjust settings, and monitor the process in real-time. An advanced programmable logic controller (PLC) with an integrated touchscreen interface is preferred. Furthermore, a computer-controlled unit integrated with dental CAD/CAM software, allowing for automated sintering cycles based on the specific restoration design being produced may also be used, which may include an LCD and keypad for manual overrides and adjustments. Preferably, a digital control system with remote monitoring and control capabilities may be provided which is connected to a network, allowing operators to control the sintering process and receive updates via a computer or mobile device.

According to a preferred embodiment, the dental sintering furnace comprises means for measuring the temperature of a dental restoration in real-time during the sintering process in the dental furnace for ensuring the quality and integrity of the final product. Precise temperature control and monitoring allow for the optimization of the sintering parameters, leading to restorations with superior mechanical properties and aesthetics. Several methods can be employed to measure the temperature efficiently in real-time. Preferably, pyrometers, also known as optical or radiation pyrometers, measure the temperature of an object based on the color of the visible light it emits at high temperatures. Infrared (IR) sensors or pyrometers can measure the temperature of an object without physical contact, based on the infrared radiation emitted by the object. By focusing on the dental restoration, an IR sensor can provide real-time temperature readings.

Finally, the sintering furnace may be equipped with advanced sensor technology embedded within the furnace chamber, designed to monitor the temperature distribution accurately. These sensors can provide real-time feedback to the furnace control system, ensuring uniform temperature and optimal sintering conditions. The integration of temperature measurement techniques with the furnace's control system allows for precise control over the sintering parameters, leading to consistent and high-quality dental restorations.

Fig. 2 shows a first embodiment of a dental sintering furnace for sintering a partially sintered zirconia dental restoration to prepare an indirect dental restoration according to the present invention. The embodiment of Fig. 2 is characterized by a reflecting means positioned opposite from the one or more light sources emitting UV-light for directing radiation to the surface area of a dental restoration other than the surface area supported by the point-like contact surfaces of the support, which is shielded from direct irradiation of the UV-light of the one or more light sources. A series of adjustable mirrors made from high-reflectivity materials such as polished aluminum or silver coatings may be used as reflecting means. These mirrors can be positioned at angles to reflect UV light to the underside or sides of the dental restoration, ensuring even exposure. Alternatively, a reflective dome or chamber surrounding the sintering area, coated with a UV-reflective material may be used. This design ensures that UV light is diffused and directed from all angles toward the restoration, minimizing shadows and promoting uniform sintering. Furthermore, a UV-reflective coating applied directly to the interior surfaces of the chamber is also preferred, which could be a UV-reflective paint or a thin film that covers the walls and the top, serving the same purpose as reflective panels.

UV LED arrays offering a range of wavelengths suitable for activating the photothermal effect in the metal oxides within the zirconia are preferably used.

Moreover, the embodiment is characterized by two support means providing each a point-like contact surface for exposing a maximum area of the surface of the partially sintered dental restoration. Ceramic pins with a high melting point and low thermal conductivity, designed to minimize heat absorption and prevent any alteration in the sintering process due to the supports themselves, are preferably used. For example, Al₂O₃ or ZrO₂ materials offer excellent strength and stability at high temperatures, with minimal thermal expansion.

The chamber may be constructed from high-temperature-resistant ceramics effectively insulating the sintering chamber, maintaining the required temperatures while protecting the external environment from heat. Alternatively, a stainless steel chamber with a heat-reflective coating on the interior may be provided. Advantageously, a double-walled stainless steel chamber with an air gap or insulating material between the walls for enhanced thermal insulation may be provided whereby this design helps maintain a consistent temperature within the sintering chamber. A chamber constructed from a high-temperature-resistant composite material, offering excellent thermal insulation properties and durability may also be used. Composites can be designed to have low thermal conductivity, reducing heat loss during the sintering process.

Preferably, a device control unit is provided which may be a microcontroller-based control unit with a touchscreen interface, offering users the ability to easily select sintering programs, adjust settings, and monitor the process in real-time. An advanced programmable logic controller (PLC) with an integrated touchscreen interface is preferred. Furthermore, a computer-controlled unit integrated with dental CAD/CAM software, allowing for automated sintering cycles based on the specific restoration design being produced may also be used, which may include an LCD and keypad for manual overrides and adjustments. Preferably, a digital control system with remote monitoring and control capabilities may be provided which is connected to a network, allowing operators to control the sintering process and receive updates via a computer or mobile device.

Fig. 3 shows a second embodiment of a dental sintering furnace for sintering a partially sintered zirconia dental restoration to prepare an indirect dental restoration according to the present invention. The embodiment of Fig 3 is characterized by reflecting means positioned opposite from each of the light sources emitting UV-light which are provided on every side wall and the top wall of the chamber, for directing radiation to the surface area of a dental restoration other than the surface area supported by the point-like contact surfaces of the support, which is shielded from direct irradiation of the UV-light of the one or more light sources. Moreover, the embodiment is characterized by a single support means providing a point-like contact surface for exposing a maximum area of the surface of the partially sintered dental restoration. The second embodiment of a dental sintering furnace focuses on maximizing the exposure of a partially sintered zirconia dental restoration to UV light from all directions, except where the restoration is in contact with the support means. This design aims to ensure uniform sintering and high-quality results. Each element of the second embodiment may be as described for the first embodiment.

Fig. 4 shows a third embodiment of a dental sintering furnace for sintering a partially sintered zirconia dental restoration to prepare an indirect dental restoration according to the present invention. The embodiment of Fig 4 is characterized by light sources provided on the bottom wall to actively irradiate from below. The third embodiment positions light sources on the bottom wall of the chamber, aiming to irradiate the partially sintered zirconia dental restoration from below. This design seeks to ensure even sintering and high-quality outcomes by optimizing light exposure.

The present invention will now be explained in further detail with reference to the following examples and comparative examples.

### Examples

Samples were prepared by milling bulk partially sintered zirconia mill blank material having the composition as shown in Table 1.

**Table 1**

| **Sample No.** | **Material: trade name** | **Composition** | **Dimensions: (mm)** | **Current (A)** |
|---|---|---|---|---|
| 1* | Cercon base | 3Y-TZP | 10 × 10× 1,5 | 16 |
| 2 | Cercon Base | 3Y-TZP | 10 × 10× 1,5 | 10 |
| | Color | 1000 ppm Fe₂O₃ | | |
| 3* | Cercon Base HT weiß | 3Y-TZP | 10 × 10× 1,5 | 16 |
| 4 | Cercon Base HT A4 | 3Y-TZP | 10 × 10× 1,5 | 16 |
| | | 1400 ppm Fe₂O₃ | | |
| | | 5000 ppm Er₂O₃ | | |
| | | 25 ppm Co₃O₄ | | |
| 5* | Cercon Base HT-ML A3 18mm | 3Y-TZP - 5Y-TZP | 18 × 10× 1,5 | 16 |
| | | 900 - 700 ppm Fe₂O₃ | | |
| | | 4500 - 3250 ppm Er₂O₃ | | |
| | | 20 - 35 ppm Co₃O₄ | | |
| 6* | CZ+ A4 | 4Y-TZP | 10 × 10× 1,5 | 16 |
| | | 3000 ppm Tb₄O₇ | | |
| | | 11250 ppm Er₂O₃ | | |
| | | 30 ppm MnO₂ | | |
| 7* | Gd2O3 | 3Gd-TZP | 10 × 10× 1,5 | 16 |
| 8 | Cercon XT B3 | 5Y-TZP | 10 × 10× 1,5 | 16 |
| | | 1100 ppm Fe₂O₃ | | |
| | | 4000 ppm Er₂O₃ | | |
| | | 5 ppm Co₃O₄ | | |

| | | | | |
|---|---|---|---|---|
| *: Reference Example | | | | |

The samples were irradiated with UV light having a wavelength of 450 nm under the conditions identified in Table 2.

**Table 2**

| **Sample No.** | **Sinter Temperature. (°C)** | **Current (A)** | **Time (s)** | **Density 1 (g/cm³)** | **Density 2 (g/cm³)** |
|---|---|---|---|---|---|
| 1* | 1350 | 16 | 90 | 3,05 | 3,05 |
| 2 | 1350 | 10 | 15 | 3,05 | 6,01 |
| 3* | 1500 | 16 | 90 | 3,1 | 3,1 |
| 4 | 1500 | 16 | 45 | 3,1 | 5,97 |
| 5* | 1500 | 16 | 45 | 3,1 | Sample too large; partially sintered only |
| 6* | 1500 | 16 | 45 | 3,3 | 3,3 |
| 7* | 1500 | 16 | 45 | 3,2 | 3,2 |
| 8 | 1500 | 16 | 45 | 3,1 | 5,85 |

| | | | | | |
|---|---|---|---|---|---|
| *: Reference Example | | | | | |

As shown by Table 2, sample no. 1 and 3 which are made of zirconia and yttria only, cannot be sintered with UV radiation under the conditions used. On the other hand, as shown by samples 2, 4, and 8, it is possible to fully sinter a milled partially sintered dental mill blank in a short time of less than a minute by irradiation with UV-light. Sample 2 was even sintered in 15 seconds. When zirconia is stabilized with Gd, sintering cannot be successfully be performed using UV-light. Example 5 indicates that a complete irradiation is important for providing a high quality dental restoration.

### Reference numerals:

- 1:: User Interface
- 2:: Device Control Unit
- 3:: Heat Shielding Material
- 4:: First UV-Light Source
- 5:: Support Adapter
- 6:: Light Reflection Material
- 7:: Second UV-Light Source
- 8:: Third UV-Light Source
- 9:: Indirect Dental Restoration

## Claims

1. A process for preparing an indirect dental restoration comprising the following steps:
(a) providing a partially sintered zirconia dental mill blank;
(b) milling a partially sintered dental restoration from the mill blank;
(c) sintering the partially sintered dental restoration by irradiating light having a wavelength in the range of 200 to 500 nm to heat the dental restoration to a temperature in the range of from 1400 °C to 1700 °C for at least 10 seconds for preparing a sintered dental restoration, wherein at least the irradiation exposed surface portion of the dental restoration comprises one or more metal oxides having a band gap of 5.0 eV or less.

2. The process according to claim 1, wherein the one or more metal oxides are present in a total amount of from 50 to 2000 ppm, wherein the metal oxides are selected from one or more oxides of Ti, Nb, Ce, Fe, Pr, and Bi, optionally in combination with less than 50 ppm in total of one or more oxides of Co, Ni, Cr and/or Mn.

3. The process according to any one of the preceding claims, wherein the sintered dental restoration has an average grain size of 600 nm or less.

4. The process according to any one of the preceding claims wherein the irradiation time is 10 minutes or less.

5. The process according to any one of the preceding claims, wherein the partially sintered zirconia dental mill blank has a three-point flexural strength in the range of from 20 to 70 MPa measured according to ISO 6872.

6. The process according to any one of the preceding claims, wherein the partially sintered zirconia dental mill blank has a density in the range of from 2.5 to 3.5 g/cm³.

7. The process according to any one of the preceding claims, wherein the sintered dental restoration has a density of at least 5.8 g/cm³

8. The process according to any one of the preceding claims, wherein the irradiated light has two or more intensity peaks in the range of from 200 to 500 nm.

9. The process according to any one of the preceding claims, wherein the irradiation is continuous and/or in form of one or a plurality of consecutive light pulses.

10. The process according to any one of the preceding claims, wherein the partially sintered zirconia dental mill blank is obtainable by a process comprising:
(i) providing a spray-dried zirconia powder having an average grain size in the range of from 30 to 90 µm;
(ii) pressing the spray-dried zirconia powder in the presence of a binder for preparing a green body;
(iii) heating the green body to a temperature in the range of from 250 to 600 °C for eliminating the binder; and
(iv) heating the heated green body a temperature in the range of from 800 to 1100 °C to provide a partially sintered zirconia dental mill blank.

11. The process according to claim 10, wherein the spray-dried zirconia powder is obtainable by spray-drying a dispersion comprising zirconia primary particles having an average primary particle size in the range of from 10 to 50 nm.

12. The process according to any one of the preceding claims wherein the process further comprises applying a glaze to the dental restoration by spraying or painting a glaze composition and irradiating with light of a wavelength in the range of from 400 to 500 nm for a predetermined time.

13. A dental sintering furnace for sintering a partially sintered zirconia dental restoration to prepare an indirect dental restoration, comprising:
(a) a chamber adapted to receive a partially sintered dental restoration on one or more point-like contact surfaces of a support adapted to expose a maximum area of the surface of the partially sintered dental restoration;
(b) one or more light sources emitting UV-light at a wavelength in the range of from 200 to 500 nm; and
(c) reflecting means for directing radiation to the surface area of a dental restoration other than the surface area supported by the point-like contact surfaces of the support, which is shielded from direct irradiation of the UV-light of the one or more light sources.

14. The dental chairside sintering furnace according to claim 13, wherein the one or more light sources emit UV-light in the range of from 200 to 500 nm at an intensity of at least 80 W/cm².

15. The dental chairside sintering furnace according to claim 13 or 14, wherein at least two different light sources are installed, the first UV light source is working in the range of from 200 to 350 nm and the second UV light source is working in the range from 350 to 500 nm, and/or
further comprising a control device for controlling the one or more light sources, preferably in response to a set of parameters.
